# EUROPEAN PATENT APPLICATION

(11) **EP 1 782 913 A2**
(43) Date of publication of application: **09.05.2007**
(21) Application number: 06255651.9
(22) Date of filing: 02.11.2006
(51) Int. Cl.: B23P 6/00, B23K 9/035, B23K 33/00

(54) **Integral backing ring for stub shaft weld repairs of rotating equipment and related method**

(30) Priority: 04.11.2005 US 266182
(71) Applicant: General Electric Company, Schenectady, NY 12345 (US)
(72) Inventor: Grycko, Lawrence Michael, Lockport Illinois 60441 (US); Nolan, John Francis, Colbeskill New York 12043 (US); Sassatelli, John Matthew, Valley Falls New York 12185 (US); Burnett, Mark Edward, Barton New York 13734 (US); Cook, Carter Steven, Westford New York 13488 (US); Parker, David Roy, Richfield Springs New York 13439 (US)
(74) Representative: Bedford, Grant Richard

(57) **Abstract**

A stub shaft section (16) adapted to be welded to a re-used end portion of a rotor shaft (12), the stub shaft section (16) including a hollow cylindrical member having a substantially uniform inner diameter and first chamfered end (18) adapted to form one side of a substantially V-shaped weld groove (22), and an integral backing ring (20) extending axially beyond the chamfered end (18), the backing ring (20) having a circumferential recess (28) in a radially outer surface (30) thereof. A related method of replacing a stub shaft on an end of a rotor shaft comprising: (a) providing a new stub shaft (16) with a first chamfered end (18) and an integral backing ring (20); (b) aligning the first chamfered end (18) with a second chamfered end (14) on the rotor shaft (12), with the integral backing ring (20) overlapping the second chamfered end (14), and with the first and second chamfered ends (18), (14) forming a substantially V-shaped weld groove (22), with the integral backing ring (20) overlapping the second chamfered end (14); (c) filling the V-shaped groove (22) with weld material (32); (d) welding the stub shaft (16) to the rotor shaft (12); and (e) machining the integral backing ring (20) away from the stub shaft (16).

## Description

This invention relates generally to the repair of rotating equipment and, more specifically, to the welding of a new shaft end or stub shaft onto the end of a damaged rotor shaft.

When performing a stub shaft repair on rotating equipment, the damaged rotor shaft and new stub shaft (both of which comprise hollow cylindrical members or components) need to be positioned accurately and secured in place before welding. The rotor shaft is prepared by having its damaged end cut off and chamfered at the designed weld prep angle. The new shaft end or stub shaft is similarly prepared, forming a substantially V-shaped weld groove at the weld interface. The root or base of the weld groove geometry where the side walls of the groove come together is an area that typically requires a backing ring to prevent weld burn-through into the rotor bore.

Typically, separate rings are inserted into the shaft or rotor bore in order to establish required fit geometry and to prevent bum-through of the weld material. These rings require separate machining operations to establish the required fit geometry. Each ring is made with a loose fit to insert into the existing bore and into the bore of the roughed-in stub shaft. The separate ring (or rings) provides crack initiation points, however, where the three parts, a shaft, the stub shaft and the ring, come together. Crack initiation sites are typically managed by machining the ring and some portion of the root of the weld out of the finished part, thereby eliminating the potential for future crack growth from this area. Nevertheless, there remains a need for a more effective weld prep configuration that enhances the assembly process, requires less machining and eliminates or at least minimizes crack initiation points.

In an exemplary embodiment, the present invention provides an integral backing ring machined into either the rotor or stub shaft end at the root or base of the weld groove.

More specifically, the incorporation of an integral backing ring at the stub shaft ID results in only two pieces coming together, with a single crack initiation point. The outer diameter of the integral backing ring is machined to an interference fit with the bore of the existing rotor shaft. This provides precise location of the stub shaft relative to the rotor shaft. The integral ring is also provided with a recess or groove circumferentially about its peripheral or outer surface, coinciding with the root or base of the weld groove. As a result, the weld material projects radially inwardly of the rotor bore surface. Complete removal of the root pass can now be accomplished without overboring the rotor shaft beyond its original inner diameter.

Accordingly, in one aspect, the present invention relates to a stub shaft section adapted to be welded to a re-used end portion of a rotor shaft, the stub shaft section comprising a hollow cylindrical member having a substantially uniform inner diameter and first end adapted to form one side of a weld groove, and an integral backing ring extending axially beyond the first chamfered end, the backing ring having a circumferential recess in a radially outer surface thereof.

In another aspect, the invention relates to a stub shaft section adapted to be welded to a re-used end portion of a rotor shaft, the stub shaft section comprising a hollow cylindrical member having a substantially uniform inner diameter and first end adapted to form one side of a weld groove, and an integral backing ring extending axially beyond the first chamfered end, the backing ring having a circumferential recess in a radially outer surface thereof; wherein the backing ring has an inner diameter less than the substantially uniform inner diameter of the hollow cylindrical member; and wherein the recess forms a base of the substantially V-shaped weld groove, the recess projecting radially inwardly of the substantially uniform inner diameter of the hollow cylindrical member.

In still another aspect, the invention relates to a method of replacing a stub shaft on an end of a rotor shaft comprising: (a) providing a new stub shaft with a first end and an integral backing ring; (b) aligning the first end with a second end on the rotor shaft, with the integral backing ring overlapping the second end, and with the first and second ends forming a weld groove, with the integral backing ring overlapping the second end; (c) filling the groove with weld material; (d) welding the stub shaft to the rotor shaft; and (e) machining the integral backing ring away from the stub shaft.

The invention will now be described in detail in connection with the drawings identified below, in which:
FIGURE 1 is a partial schematic cross section of a rotor shaft and a new stub shaft with an integral backing ring in accordance with an exemplary embodiment of the invention; and
FIGURE 2 is a partial schematic cross section of a rotor shaft and a new stub shaft with an integral backing ring in accordance with an another exemplary embodiment of the invention.

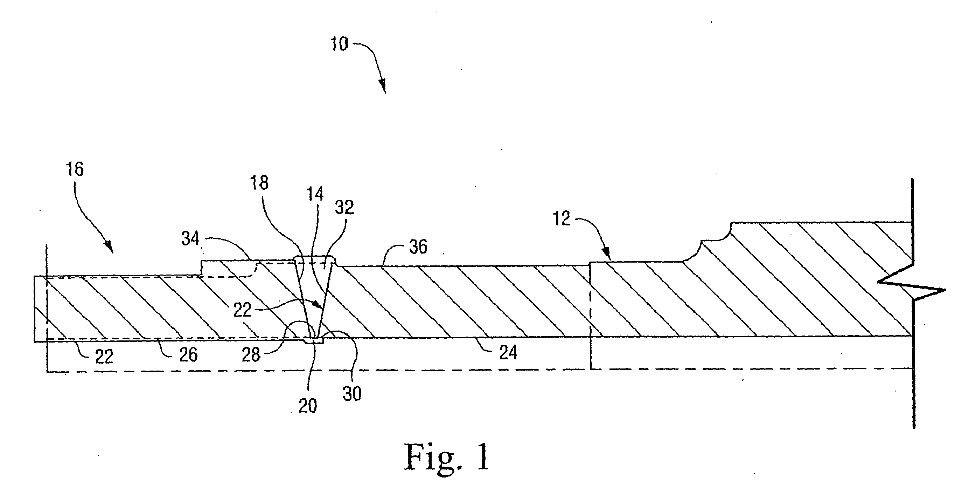

With reference to Figure 1, the assembly 10 includes an existing rotor shaft (or generator field) 12, from which a damaged end has been removed, with the surface of the rotor shaft machined to include a chamfer 14 that extends 360° about the rotor. Chamfer 14 is formed at an angle of about 70°-80° relative to the longitudinal axis of the rotor shaft.

A new stub shaft section (or simply stub shaft) 16 is provided with a similarly machined chamfer at 18 directly opposed to the chamfer 14 and also extending 360° about the rotor. At the inner diameter of the stub shaft, an integral backing ring 20 extends axially forward of the chamfered surface 18 so as to underlie and form the root or base of a weld groove (or weld prep) 22 formed by the opposed chamfered surfaces 14, 18. The backing ring 20 thus also partially underlies or overlaps the inner diameter of the rotor 12. In this regard, the outer diameter of the integral backing ring is sized to establish an interference fit with the rotor shaft bore, thus providing for accurate axial alignment of the stub shaft and rotor shaft. The integral backing ring 20 lies radially inwardly of the inner diameter surface 24 of the rotor shaft 16 and similarly, radially inward of the finished inner diameter 26 of the stub shaft 16. A shallow recess or groove 28 is formed in the radially outer surface 30 of the integral backing ring 20, forming the root or base of the weld groove 22. For a submerged arc weld process, the weld groove 22 is filled with a metal filler material 32 that extends from the base of the integral backing ring 20 to, and slightly radially outward of, the radially outer surfaces 34, 36 of the rotor shaft and stub shaft, respectively. Note that the relief 28 has a depth that extends radially inward of the inner diameter surface 24, 26, thus insuring a full penetration weld.

After welding, the stub shaft 16 is machined to final dimensions as indicated by the dotted lines in the figure, including machining the inner diameter surface 22 to the finished inner diameter surface 26. Notice that the integral backing ring 20 is machined off in its entirety, and including weld metal present in the recess 28, leaving a smooth and uniform bore diameter across the stub shaft 16 and the rotor shaft 12, particularly advantageous for subsequent bore inspections. Thus, the welding process can now be accomplished without overboring the rotor shaft beyond its original inner diameter. This also eliminates any steps or shoulders in the bore, stress risers and any other requirements for bottle boring, all of which are undesirable and to be avoided. It will be understood, however, that if no bore inspections are planned or required, the backing ring can remain in place. In this case, the backing ring will create a stress riser in the bore.

By utilizing an integral backing ring 20, there is only a single potential crack initiation point. In addition, extra machining operations required for separate backing rings are also eliminated and because the diameter of the integral ring is machined to an interference fit with the bore of the existing rotor, precise alignment between the re-used rotor shaft and the new stub shaft to be welded is assured.

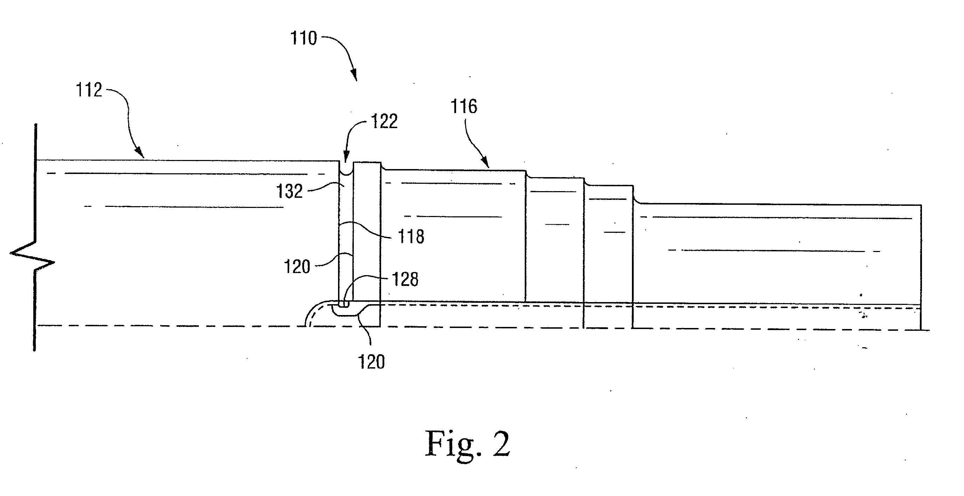

With reference now to Figure 2, an alternative weld prep is illustrated. For convenience, similar reference numerals, with the prefix "1" added, are used to designated corresponding components. Thus, the assembly 110 includes an existing rotor shaft (or generator field) 112 and a replacement stub shaft 116. In this embodiment the facing surfaces 114, 118 of the respective shaft components 112, 116 are machined to be parallel to each other rather than angled in the previously described embodiment. Note that the backing ring 120 is also grooved at 128, again insuring a full penetration weld, i.e., with metal filler material 132 extending radially from the base of the backing ring groove. Aside from the difference in the shape of the weld prep, the welding/finishing operations are otherwise substantially identical.

While the rotor and stub shaft are welded in the exemplary embodiment utilizing a submerged arc welding process, it will be understood that this weld prep arrangement may also be employed with a gas tungsten arc welding (GTAW) process (or any other welding process that produces sufficient mechanical properties), utilizing a narrow groove between the opposed rotor shaft end and stub shaft end.

It is also possible to locate the backing ring on the salvaged rotor shaft end such that the hollow stub shaft fits over the backing ring. This arrangement would not provide all of the advantages that having the backing ring on the stub shaft provides, but it would facilitate alignment.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the spirit and scope of the appended claims. For example, while described in terms of the repair of an existing rotor shaft, the weld prep configuration described herein could be used in the manufacture of new rotors as well.

### PARTS LIST

Rotor assembly 10
Rotor shaft 12
Chamfered (second) end 14 (of rotor shaft)
Stub shaft section or stub shaft 16
Chamfered (first) end 18 (of stub shaft)
Backing ring 20
Weld groove 22
Inner diameter surface 24 (of rotor shaft)
Finished diameter 26 (of stub shaft)
Recess or groove 28
Radially outer surface 30 (of backing ring)
Weld filler material 32
Radially outer surface 34 (of rotor shaft)
Radially outer surface 36 (of stub shaft)
Rotor assembly 110
Rotor shaft 112
End face of rotor 114
Stub shaft 116
End face of stub shaft 118
Backing ring 120
Groove or recess 128
Weld filler material 132

## Claims

1. A stub shaft section (16) adapted to be welded to a re-used end portion of a rotor shaft (12), the stub shaft section (16) comprising a hollow cylindrical member having a substantially uniform inner diameter and first end (18) adapted to form one side of a weld groove (22), and an integral backing ring (20) extending axially beyond said first end, said backing ring having a circumferential recess (28) in a radially outer surface (30) thereof.

2. The stub shaft section of claim 1 wherein said backing ring (20) has an inner diameter less than said substantially uniform inner diameter of said hollow cylindrical member.

3. The stub shaft section of claim 1 or claim 2 wherein said recess (28) forms a base of said weld groove (22), said recess projecting radially inwardly of said substantially uniform inner diameter of said hollow cylindrical member.

4. The stub shaft section of any preceding claim in combination with the re-used end portion of the rotor shaft (12), said re-used end portion having a second end (14) forming the other side of the weld groove (22).

5. The stub shaft section of claim 4 wherein said backing ring (20) overlaps said second chamfered end.

6. The stub shaft section of any preceding claim wherein said weld groove is filled with weld metal (32).

7. A method of replacing a stub shaft on an end of a rotor shaft comprising:
(a) providing a new stub shaft (16) with a first end (18);
(b) aligning the first end (18) with a second end (14) on the rotor shaft, with one or the other of the first and second ends having an integral backing ring (20) overlapping the first and second ends, and with said first and second ends forming a weld groove (22);
(c) filling the weld groove with weld material (32); and
(d) welding the stub shaft to the rotor shaft.

8. The method of claim 7 wherein said backing ring (20) is formed with a circumferentially extending recess (28) in a radially outer surface thereof, said recess forming a base for said weld groove.

9. The method of claim 7 or claim 8 wherein said recess (28) projects radially inwardly of a substantially uniform inner diameter of said rotor shaft.

10. The method of any one of claims 7 to 9 wherein said backing ring (20) is provided on said first end (18) of said stub shaft (16).
